# EUROPEAN PATENT APPLICATION

(11) **EP 4 287 560 A1**
(43) Date of publication of application: **06.12.2023**
(21) Application number: 22176425.1
(22) Date of filing: 31.05.2022
(51) Int. Cl.: H04L 9/40, H04L 9/00

(54) **ENCRYPTION AND DECRYPTION OF TRANSACTIONS OF A DISTRIBUTED LEDGER**

(71) Applicant: Siemens Aktiengesellschaft, 80333 München (DE)
(72) Inventor: Safieh, Malek, 81539 München (DE); Schneider, Daniel, 80796 München (DE)
(74) Representative: Siemens Patent Attorneys

(57) **Abstract**

Techniques of encrypting and decrypting a transaction associated with at least one of one or more business objects are provided. The transaction is generated by a node of a network that maintains a distributed ledger. The transaction is encrypted or decrypted based on a symmetric key. The symmetric key is generated based on an identity associated with each of the at least one of the one or more business objects.

## Description

### TECHNICAL FIELD

Various aspects of the disclosure generally relate to operating a node of a network of nodes that maintains a distributed ledger such as a blockchain. Various examples of the disclosure specifically relate to encrypting and/or decrypting transactions of a distributed ledger maintained by a network of nodes based on identities of business objects involved in the transactions.

### BACKGROUND

A distributed ledger (also called a shared ledger) is a database that can be found across several locations or among multiple participants. Unlike a centralized database, a distributed ledger is decentralized, which helps to remove the need for a central authority or intermediary for processing, validating, or authenticating transactions. Distributed ledgers employ multiple nodes that do not need to fully trust each other, and records will be stored in the ledger after the parties involved have reached a consensus.

A blockchain is an exemplary form of a distributed ledger. Blockchains create an unchangeable ledger of records, e.g., transaction blocks, maintained by a decentralized network after a consensus approves all the records. Hence, a validation process for approval of records or generation of new valid blocks is required. In general, the transaction blocks are stored securely in the distributed ledger of nodes. Each copy of the ledger is immutable and contentiously updated with new blocks of transactions. Hence, all nodes that contain a copy of the ledger receive the newly created blocks. By default, the communication with nodes of the ledger is done over an insecure channel. In order to achieve secure communication over an insecure channel, it is beneficial to encrypt the data, e.g., transactions, using symmetric encryption methods, like the Advanced Encryption Standard (AES).

However, when using such encryption methods, encrypted data can be decrypted only by a user (or a node) that owns the corresponding symmetric key, which was used to generate the ciphertext. Hence, a secure exchange of the symmetric key is necessary between the corresponding entities in advance. Typically, blockchains contain many nodes and the number of required symmetric keys can grow quadratic with the number of nodes in the network, to allow secure communications between all nodes. If only one pre-defined symmetric key is used for all communication between all nodes to reduce the number of keys, the security would be significantly reduced, e.g. in case the key is compromised, all communication is insecure. Because validated transactions are added to the shared ledger, all nodes that contain a ledger need to receive these transactions over a network. Accordingly, efficient methods to exchange the symmetric keys are highly required.

Some blockchain networks, like Hyperledger Fabric, provide the possibility of using private and protected peer-to-peer communication, as well as protected memories, to exchange and store different symmetric keys for secured communication in the network, respectively. Private and protected peer-to-peer communication may increase complexity and time consumption of the system. Moreover, due to the quadratic increasing number of required keys, this concept is quite inefficient regarding the search process for the corresponding key in the protected memory and the memory requirements.

Some other blockchain networks, such as MultiChain, use three data portions to encrypt a transaction that is transmitted between nodes. In the first portion, the encrypted transaction is included, which is transmitted between the nodes. The encryption of this transaction is obtained with a randomly generated password as a key for a symmetric cryptographic algorithm. Further, in the second data portion, an asymmetric cryptographic algorithm, e.g. the Rivest-Shamir-Adleman (RSA), is used to encrypt the password used in the first portion. The third data portion provides data access for corresponding participants. All nodes that receive transmitted blocks of transactions in the blockchain firstly decrypt the second data portion using the corresponding public key and asymmetric cryptographic algorithm, to retrieve the correct password. Then, using this password as a symmetric key, the transaction in the first data portion can be decrypted with the same symmetric cryptographic algorithm. Using this concept, calculating an asymmetric cryptographic algorithm is required for the encryption of each transaction, which is computationally intensive and increases the complexity.

### SUMMARY

Accordingly, a need exists for advanced techniques of operating nodes of a network which respectively maintain a copy of a distributed ledger. Specifically, a need exists for advanced techniques that mitigate the above-identified restrictions and drawbacks.

This need is met by the features of the independent claims. The features of the dependent claims define embodiments.

According to examples disclosed herein, methods for encryption as well as decryption and nodes of a network that maintains a distributed ledger are disclosed. Such methods facilitate secure communication between nodes over an insecure channel while reducing system complexity and/or computational burden.

The multiple nodes are operated by different parties or organizations.

The multiple nodes can implement a distributed database system (DBS).

A computer-implemented method is provided. The method pertains to operating a node of a network. The network maintains a distributed ledger. The method comprises generating a transaction associated with at least one of one or more business objects. The method further comprises obtaining an identity associated with each of the at least one of the one or more business objects. The method further comprises generating a symmetric key based on the identity associated with the at least one of the one or more business objects and encrypting the transaction based on the symmetric key to obtain ciphertext. The ciphertext comprises the encrypted transaction.

A computer program or a computer-program product or a computer-readable storage medium that includes program code is provided. The program code can be loaded and executed by at least one processor. Upon loading and executing the program code, the at least one processor performs a method. The method pertains to operating a node of a network. The network maintains a distributed ledger. The method comprises generating a transaction associated with at least one of one or more business objects. The method further comprises obtaining an identity associated with each of the at least one of the one or more business objects. The method further comprises generating a symmetric key based on the identity associated with the at least one of the one or more business objects and encrypting the transaction based on the symmetric key to obtain ciphertext. The ciphertext comprises the encrypted transaction.

A node of a network is provided. The network maintains a distributed ledger. The node comprises a processor and a memory. The processor is configured to load program code from the memory and execute the program code. Upon executing the program code, the processor is configured to generate a transaction associated with at least one of one or more business objects. The processor is further configured to obtain an identity associated with each of the at least one of the one or more business objects. The processor is further configured to generate a symmetric key based on the identity associated with the at least one of the one or more business objects and encrypt the transaction based on the symmetric key to obtain ciphertext. The ciphertext comprises the encrypted transaction.

A computer-implemented method is provided. The method pertains to operating a node of a network. The network maintains a distributed ledger. The method comprises receiving ciphertext from a further node of the network. The ciphertext comprises an encrypted transaction which is associated with at least one of one or more business objects. The method further comprises obtaining an identity associated with each of the at least one of the one or more business objects based on the ciphertext. The method further comprises generating a symmetric key based on the identity associated with the at least one of the one or more business objects and decrypting the encrypted transaction based on the symmetric key.

A computer program or a computer-program product or a computer-readable storage medium that includes program code is provided. The program code can be loaded and executed by at least one processor. Upon loading and executing the program code, the at least one processor performs a method. The method pertains to operating a node of a network. The network maintains a distributed ledger. The method comprises receiving ciphertext from a further node of the network. The ciphertext comprises an encrypted transaction which is associated with at least one of one or more business objects. The method further comprises obtaining an identity associated with each of the at least one of the one or more business objects based on the ciphertext. The method further comprises generating a symmetric key based on the identity associated with the at least one of the one or more business objects and decrypting the encrypted transaction based on the symmetric key.

A node of a network is provided. The network maintains a distributed ledger. The node comprises a processor and a memory. The processor is configured to load program code from the memory and execute the program code. Upon executing the program code, the processor is configured to receive ciphertext from a further node of the network. The ciphertext comprises an encrypted transaction which is associated with at least one of one or more business objects. The processor is further configured to obtain an identity associated with each of the at least one of the one or more business objects based on the ciphertext. The processor is further configured to generate a symmetric key based on the identity associated with the at least one of the one or more business objects and decrypt the encrypted transaction based on the symmetric key.

Unless explicitly stated otherwise the terms "perform", "calculate", "computer-implemented", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory unit" or "memory module" or the like can be implemented by a volatile memory in the form of random access memory (RAM) or a non-volatile memory such as a hard disc or data carrier.

A "module", in the context of the present disclosure, can be implemented by a processor and/or a memory unit for storing program instructions. A module can be implemented in hardware and/or software and/or firmware. For example, the processor can be configured to execute the program instructions such that the processor executes functions that implement methods or steps of a method as described herein. A module can also be a node of a DBS that implements specific functions/features of the respective module. The respective modules can, e.g., be implemented as separate/individual modules. For this, the respective modules can include further elements. For example, these further elements can be one or more interfaces (e.g., database interfaces, communication interfaces - e.g., a network interface or WLAN interface) and/or an evaluation unit (e.g., a processor) and/or a memory unit. By means of the interfaces, it is possible to exchange data (e.g., to receive, communicate, transmit or provide data). By means of an evaluation unit, it is possible to compare, validate, process, assign or calculate data in a computer-implemented and/or automated manner. By means of the memory unit, data can be stored, retrieved or provided in a computer-implemented and/or automated manner. It would also be possible that multiple modules are implemented by a common processor.

The term "include" - specifically with respect to data and/or information - can relate to a (computer-implemented) storing of respective information or the respective date in a data structure/data set (which, e.g., in turn is also stored in a memory unit) in the context of the present disclosure.

The term "assign" - specifically in relation to data and/or information - can relate to a computer-implemented assignment of data and/or information in connection with the present disclosure. For example, a first date is assigned, by means of a memory address or a unique identifier, a second date, e.g., by storing the first date together with the memory address or the unique identifier of the second date in a data set. This also pertains to data being "in association" with other data.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the blockchain or the (respectively of the corresponding infrastructure) in the context of the present disclosure.

A "smart-contract process" can refer to the execution of program code, e.g., of a control instruction, in a process by means of the DBS or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block of a DBS or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the DBS. For example, if there is a need for an increased level of security, it would be possible to create and validate checksums on transaction level. For example, if a reduced level of security is required, then it would be possible to create and validate checksums on block level - e.g., across the entire block or only across a part of the data block (e.g., sub-blocks) and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the DBS testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a DBS indicates or references to a preceding data block of the DBS - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the DBS; to thereby chain a new data block with a (existing) data block of the DBS. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the DBS includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described.

The data - that is, e.g., stored in a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the distributed ledger, a transaction checksum of a data block of the respective data, e.g., of the distributed ledger or of another database, or a data checksum determined across the data can be used.

In addition, the respective transaction can optionally include a link to or an indication of a memory position - e.g., an address of a file server and indications where the respective data are to be found on the file server; or an address of another distributed ledger which includes the data. The respective data could, e.g., also be provided in a further transaction of a further data block of the distributed ledger - e.g., if the respective data and the associated checksums are included in different data blocks. It would also be possible that those data are provided via another communication channel - e.g., via another database and/or a cryptographically-secured communication channel.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain or of the distributed ledger.

The term "security protected" can, specifically, relate to a protection that can be implemented by a cryptographic method. For example, this can be implemented by using a DBS for the providing or communication or transmitting of respective data/transactions. This can be implemented by a combination of the various checksums - e.g., cryptographic - , by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a distributed ledger includes chaining of data blocks of a distributed ledger. The term "chaining of data blocks of a distributed ledger" in the connection of the present disclosure can relate to the data blocks respectively including information (such as the chaining checksum) which links to another data block or multiple other data blocks of the distributed ledger [1], [4], [5].

Insertion of transactions into a distributed ledger can include saving/storing the transactions in one or more data blocks of the distributed ledger.

Insertion of transactions can include validating and/or confirming transactions.

The term "insertion of transactions into the distributed ledger" and the like (specifically, storing a transaction in a distributed ledger) can relate to communicating a transaction or transactions or a data block including the transactions to one or more nodes of a DBS. If those transactions are successfully validated, e.g., by means of the one or more nodes, these transactions can be added to the chain as a new data block with at least one existing data block of the distributed ledger [1], [4], [5]. For this, the respective transactions are stored in a new data block. In particular, this validating and/or chaining can be implemented by a trusted node, e.g., a mining node, a blockchain oracle or a blockchain platform.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the distributed ledger.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving transactions in data blocks", "saving transaction" and the like can relate to a direct saving or indirect saving. A direct saving can relate to the respective data block of the distributed ledger or the respective transaction of the distributed ledger including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the distributed ledger".

A "program code" - such as a smart contract - can relate to a program instruction or multiple program instructions which are saved in one or more transactions, in connection with the present disclosure. The program code can be executable and can be executed, e.g., by the DBS. This can be implemented, e.g., by a runtime environment, e.g., of a virtual machine, wherein the runtime environment or the program code are preferably Turing complete. The program code is preferably executed by the infrastructure of the DBS [4], [5]. Here, a virtual machine is implemented by the infrastructure of the DBS. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the distributed ledger - e.g., a blockchain -, e.g., in a data block of the distributed ledger. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "distributed ledger", which can also be referred to simply as "distributed database", can generally relate to a decentralized, distributed database, a blockchain, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereumbased implementation [1], [4], [5]. The term "distributed database" can also relate to a DBS that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words it is, in particular, not possible to propagate through or visit transactions or blocks or nodes of the graph backwards (i.e., opposite to the common unified direction). Acyclic means, in particular, that there are no loops or ring closures when traversing the graph. For example, a distributed ledger can relate to a public distributed ledger (e.g., a public blockchain) or a closed (private) distributed databased system (e.g., a private blockchain).

For example, in the case of a public distributed ledger, the nodes and/or devices can join the DBS without proof of authorization or authentication or login credentials, respectively be accepted by the DBS without such information. In particular, in such a case the operator of the nodes and/or devices can remain anonymous.

For example, in the case of implementation of the distributed ledger by a closed database system, new nodes and/or devices can require a valid proof of authorization and/or valid authentication information and/or valid credentials and/or valid login information to join the DBS or be accepted by the DBS. A respective consortium of parties may require consensus for accepting a new party.

A DBS can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a distributed ledger - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the DBS. Thereby, it is possible to implement blockless DBS such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the distributed ledger, such that they are, in particular, saved in a secured manner. For this the transactions can be chained by means of a chaining checksum, e.g., by using a separate checksum or the transaction checksum of one or more transactions as chaining checksum, which is saved in a new transaction in the distributed ledger when storing the new transaction in the distributed ledger. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the distributed ledger" can relate, in connection with the present disclosure, e.g., to the data block of the distributed ledger that is a direct predecessor of the (given) data block. Alternatively, the term "preceding data blocks of a (given) data block of the distributed ledger" can also relate to all data blocks of the DBS that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of a DBS" and the like can relate, in the context of the present disclosure, to devices - e.g., mobile devices, wireless communication devices, computers, smartphones, clients or participants - that perform operations associated with the distributed ledger, e.g., a blockchain [1], [4], [5]. Such nodes can, e.g., execute transactions of a distributed ledger or the respective data blocks or can insert new data blocks including new transactions into the distributed ledger by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block with the distributed ledger. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, which can also be nodes of the DBS. Thereby, the devices can be mobile devices or devices of the Internet of things (IoT), which can also be nodes of the DBS. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods - , mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the DBS, i.e., do not execute operations of the DBS or simply retrieve those without executing transactions, inserting data blocks or calculate proof of works. Alternatively, the term "computer" or "device" can also relate to a node of the DBS. In other words, a device can in particular implement a node of the DBS or a device outside of the blockchain and the DBS, respectively. A device outside of the DBS can, e.g., access the data - e.g., the transactions or the control transactions - of the DBS. A device outside of the DBS can be controlled by nodes - e.g., by means of smart contracts and/or blockchain oracles. For example, if a control of a device - e.g., a device implemented as a node or a device outside of the DBS - is implemented by a node, then this can occur via a smart contract which, in particular, is saved in a transaction of the DBS.

### List of citations

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance",Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a network of multiple nodes according to various examples, the network maintaining a distributed ledger.
FIG. 2 schematically illustrates an exemplary structure of a distributed ledger of FIG. 1 in further detail according to various examples.
FIG. 3 schematically illustrates a node of the network of FIG. 1 in further detail according to various examples.
FIG. 4 is a flowchart of a method according to various examples.
FIG. 5 is a flowchart of a further method according to various examples.

### DETAILED DESCRIPTION OF THE DRAWINGS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques will be disclosed that pertain to operating nodes of a network of nodes that forms a DBS. The network of nodes maintains a distributed ledger. The distributed ledger can be implemented by a blockchain. In such a case, the network can be referred to as a blockchain network. For sake of simplicity, various examples will be disclosed hereinafter with respect to an implementation of the distributed ledger by a blockchain; however, respective techniques may be readily applied to other kinds and types of implementation of the distributed ledger, different than a blockchain.

According to various examples, a blockchain application can be facilitated by the network of nodes. The blockchain application may define interaction between multiple parties. The multiple parties can form a consortium.

To give a few examples, it would be possible that the multiple parties pertain to different suppliers along a supply chain, e.g., a food supply chain. The multiple parties could pertain to different machines or automated equipment in an industrial manufacturing process.

Each of all or some of the nodes of the network operates according to predetermined policies when maintaining the blockchain, e.g., encryption and/or decryption policies. Such encryption and/or decryption policies may facilitate secure communication between the nodes, e.g., over an insecure channel. Specifically, after generating a transaction associated with at least one of one or more business objects, the transaction is encrypted based on a symmetric key to obtain ciphertext, which comprises the encrypted transaction. The symmetric key is generated based on an identity associated with the at least one of the one or more business objects.

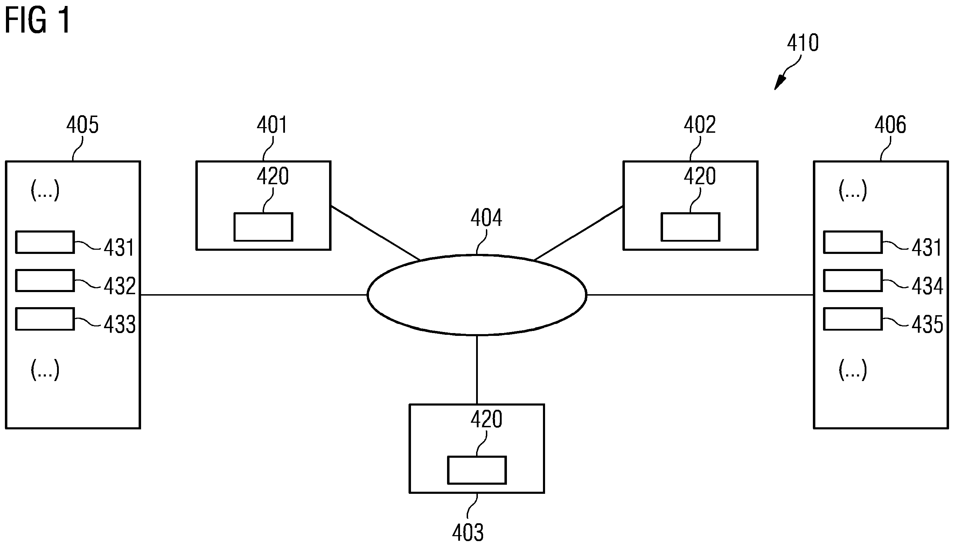

FIG. 1 schematically illustrates a network 410 of multiple nodes 401-403 which respectively communicate with each other over channel 404. Each node 401-403 stores and/or maintains a respective copy of a shared ledger, such as a blockchain 420. Accordingly, the network 410 maintains the blockchain 420. The nodes 401-403 form a DBS. The network 410 may be a public blockchain network, a private (or managed) blockchain network, a consortium blockchain network, or a hybrid blockchain network. The channel 404 may be insecure.

According to various examples, the network 410 may further comprise one or more user nodes, such as user nodes 405 and 406 respectively depicted in FIG. 1. The one or more user nodes may be a personal computer, a server, a tablet, a smart phone, or any other similar divices/terminals. The one or more user nodes may execute one or more applications which can generate at least one transaction associated with at least one of one or more business objects. For instance, as shown in FIG. 1, the user node 405 may generate transactions when executing each of applications 431-433. Similarly, the user node 406 may generate transactions when executing each of applications 431, 434, and 435. The one or more user nodes may be dedicated to some specific applications or execute the same applications. The one or more user nodes may respectively communicate with each of the nodes 401-403 via the channel 404.

The blockchain 420 is generally associated with smart contracts amongst the consortium of parties that participates in a blockchain application and operates the nodes 401-403. Typically, each party of the consortium operates a respective node 401-403. The user nodes 405 and 406 may be operated by the same party/organization, or by different parties/organizations. Each of the user nodes 405 and 406 may be paired with one of the nodes 401-403 and together operated by the same party/organization. For example, the user node 405 and the node 401 may be operated by the same party/organization, and the user node 406 and the node 402 may be operated by the same party/organization.

In general, smart contracts are digital contracts stored on a blockchain that are automatically executed when predetermined terms and conditions are met. Specifically, smart contracts may be simply programs stored on a node that run when predetermined conditions are met. They typically are used to automate the execution of an agreement so that all participants can be immediately certain of the outcome, without any intermediary's involvement or time loss. They can also automate a workflow, triggering the next action when conditions are met.

For example, smart contracts may work by following simple "if/when...then..." statements that are written into code. A network of nodes executes the actions when predetermined conditions have been met and verified. These actions could include releasing funds to the appropriate parties, registering a vehicle, sending notifications, or issuing a ticket. The blockchain is then updated when the transaction is completed. That means, for example, in a private blockchain network, the transaction cannot be changed, and only parties who have been granted permission can see the results.

Within a smart contract, there can be as many stipulations as needed to satisfy the participants that the task will be completed satisfactorily. To establish the terms, participants may determine how transactions and their data are represented on the blockchain, agree on the "if/when...then..." rules that govern those transactions, explore all possible exceptions, and define a framework for resolving disputes. For example, the smart contracts may define different states of business objects and govern the processes that move the business object between these different states.

According to this disclosure, a business object may be an entity within a multitiered software application that works in conjunction with the data access and business logic layers to transport data. For example, a "Manager" would be a business object where its attributes can be "Name", "Second name", "Age", "Area", "Country" and it could hold a 1-to-n association with its employees (a collection of Employee instances). Another example would be a concept like "Process" having "Identifier", "Name", "Start date", "End date" and "Kind" attributes and holding an association with the "Employee" (the responsible) that started it. The business object may be any assets, such as commercial and/or financial assets. For example, the business object may be industrial products inside a supply chain.

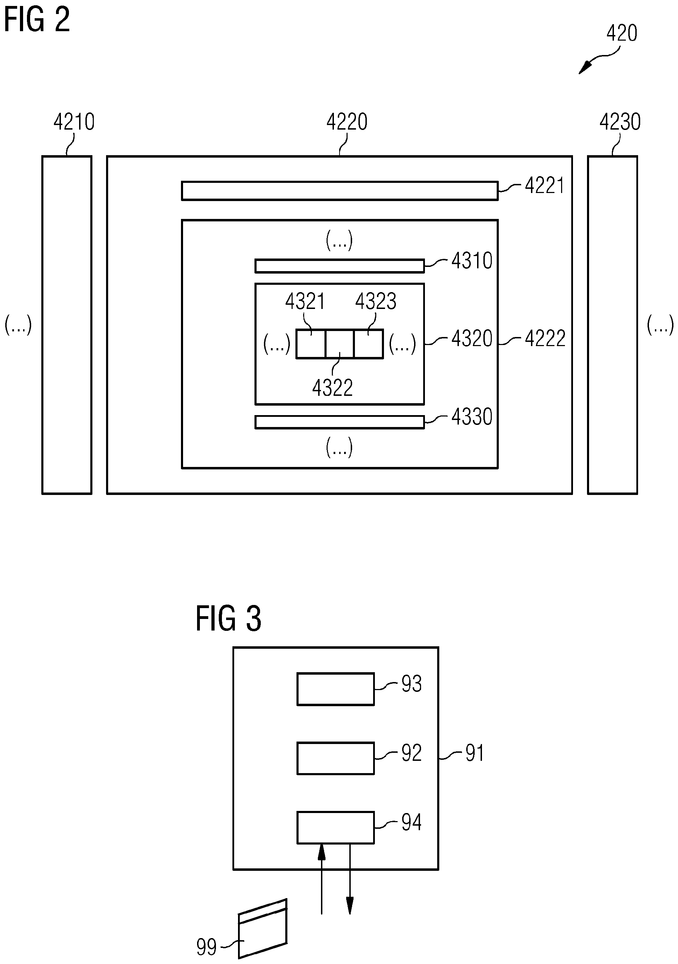

FIG. 2 schematically illustrates an exemplary structure of a distributed ledger, such as the blockchain 420 of FIG. 1.

The blockchain 420 includes multiple blocks, such as three successive blocks 4210, 4220, and 4230. Each of the multiple blocks may share the same or similar structure. For sake of simplicity, FIG. 2 only depicts a detailed structure of block 4220.

The block 4220 includes a header 4221. The header 4221 includes metadata. Such metadata can include a checksum (e.g., a hash value) of the preceding block 4210 of the blockchain 420. The metadata can include a pointer to the preceding block 4210. The header 4221 may also include a timestamp on which block is generated.

The block 4220 may further include a body 4222 which includes a list of validated/accepted transactions, such as three successive transactions 4310, 4320, and 4330. Each of the multiple transactions may share the same or similar structure. For sake of simplicity, FIG. 2 only depicts a detailed structure of the transaction 4320.

The transaction 4320 may include one or more business objects and each of the one or more business objects may include an identity associated with the respective business object, such as identities 4321-4323 associated with three different business objects. Each of the identities 4321-4323 may be a unique and/or non-manipulable identity, e.g., a fingerprint, a number, a character, or a phrase. Each of the transactions of the list of the body 4222 may be generated by an application running on a node of the network 410, e.g., any one of the nodes 401-403. Alternatively or optionally, each of the transactions of the list of the body 4222 may be generated by an application, e.g., any one of applications 431-435, running on a user node of the network 410, e.g., either the user node 405 or 406.

Alternatively or optionally, the identity associated with the respective business object, such as identities 4321-4323, may be stored in a memory of the respective node, e.g., any one of the nodes 401-403, or of the respective user node, e.g., either 405 or 406. The memory may be an additional secured and/or protected memory for setting up a secure message interface for transactions in the blockchain 420.

FIG. 3 schematically illustrates a node 91. The node 91 could, e.g., implement any one of nodes 401-403, or of the user nodes 405-406 of the network 410 of the example of FIG. 1.

The node 91 includes a processor 92 and a memory 93 and a communication interface 94. The processor 92 can receive data via the communication interface 94 and can transmit data via the interface 94, e.g., to other nodes 401-403 or user nodes 405-406. For instance, the processor 92 could receive a query to store a transaction and the associated transaction 99 via the communication interface 94. The processor 92 could output a result of a verification task of a transaction via the communication interface 94. The correctness of a smart contract can be validated. The processor 92 could send/receive the transaction 99 via the communication interface 94 to the other (user) nodes of the network 410.

The processor 92 can load program code from the memory 93 and can then execute the program code. Upon loading the program code, the processor 92 can respectively perform techniques as disclosed herein, e.g., with respect to encrypting and/or decrypting one or more transactions in the blockchain 420.

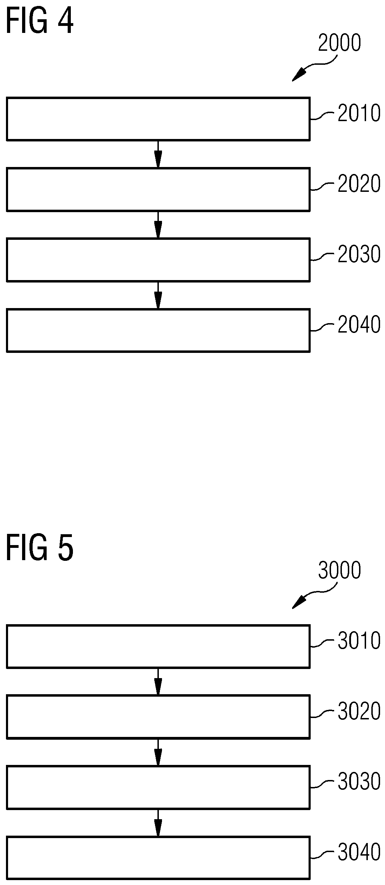

Details with respect to the operation of the node 91, specifically the processor 92, will be explained in connection with FIG. 4 and FIG. 5, hereinafter.

FIG. 4 is a flowchart of a method 2000 according to various examples. The flowchart of FIG. 4 could be executed by a node of a network of nodes that is maintaining a copy of a distributed ledger such as the blockchain 420, or by a user node which is not maintaining a copy of a distributed ledger but is connectable to or part of a network of nodes maintaining a distributed ledger. For instance, the method 2000 of FIG. 4 could be executed by any one of nodes 401-403 or of the user nodes 405-406 of the network 410 of FIG. 1. Hereinafter, for sake of simplicity, "a/the node" refers to any one of either node 401-403 or user node 405-406. More specifically, it would be possible that the method 2000 according to FIG. 4 is executed by the processor 92 upon loading and executing program code from the memory 93, cf. FIG. 3.

Prior to executing the method 2000 of FIG. 4, the blockchain 420 can be instantiated. For this, genesis data can be replicated across all nodes of the network.

FIG. 4 illustrates a method 2000 that pertains to encrypting a transaction, e.g., any one of transactions, 4310, 4320, 4330, in the blockchain 420, after generating the transaction. The transaction is associated with at least one of one or more business objects, e.g., any one or more of business objects respectively denoted by identities 4321-4323. The encrypting of the transaction is based on a symmetric key and thereby ciphertext is obtained, which comprises the encrypted transaction. The symmetric key is generated based on the identity associated with the at least one of the one or more business objects, e.g., one or more of the identities 4321-4323. Details of the method 2000 are described below.

At block 2010, a transaction associated with at least one of one or more business objects is generated.

For instance, referring to FIGs. 1 and 2, when a party or an organization operating a node 401 and a user node 405 needs to generate a new transaction 4320 associated with one or more of the three business objects respectively denoted by identities 4321-4323, the new transaction 4320 may be generated via an application running on either the node 401 or the user node 405. The application may be dedicated to processing tasks associated with the three business objects respectively denoted by identities 4321-4323. Alternatively, the application may be developed for processing tasks associated with multiple business objects and the party or organization can select one or more of the multiple business objects when generating the new transaction. There may be multiple applications running on either the node 401 or the user node 405 for processing different tasks associated with different single or combined business objects. Each of the business objects may be pre-defined when developing a specific application for processing tasks associated with the respective business object(s).

At block 2020, an identity associated with each of the at least one of the one or more business objects is obtained.

For example, after generating a new transaction associated with the three business objects respectively denoted by identities 4321-4323 of FIG. 2, the three identities 4321-4323 can be obtained based on the three business objects. Alternatively, the three identities 4321-4323 can be obtained before generating the new transaction, e.g., after determining or selecting the business objects with which the transaction is associated. The business objects and corresponding identities may have a one-to-one mapping and different business objects may have different identities. I.e., once the business objects are determined, the respective identities are determined. Each of the three business objects may comprises a unique and non-manipulable identity, such as a unique number, a unique character, or a unique phrase.

According to various examples of this disclosure, the identity associated with each of the at least one of the one or more business objects may be obtained from a memory of the node generating the new transaction, such as node 401 or user node 405 of FIG. 1, and the memory may be separated from the distributed ledger. For example, for the node 401, the memory may be a secured and protected memory, which is additional to, e.g., memory 93 of node 91, for setting up a secure message interface for transactions in the distributed ledger, such as blockchain 420. For the user node 405, there would be no need to have an additional memory because the user node 405 does not maintain or store a copy of the distributed ledger. The identity associated with each of the at least one of the one or more business objects may be pre-defined and stored in the memory. Additionally or optionally, the respective business objects corresponding to the respective identity may be stored in the memory in a manner of one-to-one mapping.

By storing the identity associated with each of the at least one of the one or more business objects in a memory which is separated from (a copy of) the distributed ledger, search processes for corresponding identity can be simplified, which can be advantageous depending on the required throughput of the corresponding application. Further, the distributed ledger may not need to be protected against attacks, because, as explained below, the symmetric key for encrypting transactions is generated/derived based on the identity stored in the memory, which may be a secured and protected memory. On the other hand, an additional memory separated from the copy of the distributed ledger is needed.

Alternatively, the identity associated with each of the at least one of the one or more business objects may be obtained from the distributed ledger. For example, when the new transaction is generated by the node 401 of FIG. 1, the identity can be obtained from a copy of the distributed ledger maintained by the node 401 itself. Alternatively, when the new transaction is generated by the user node 405 of FIG. 1, the identity can be obtained from a copy of the distributed ledger maintained by any one of nodes 401-403. For example, the identity associated with each of the at least one of the one or more business objects may be obtained from a previous transaction associated with the at least one of the one or more business objects of the copy of the distributed ledger. Referring to FIG. 2, when generating transaction 4330, the at least one of the one or more business objects may be obtained from transaction 4320 or 4310. Alternatively, the at least one of the one or more business objects may be obtained from any one of the preceding transactions of transaction 4310, such as the first transaction of block 4220. Further, the at least one of the one or more business objects may be obtained from any one of transactions of preceding blocks of block 4220, e.g., block 4210.

By storing/adding the identity associated with each of the at least one of the one or more business objects in the distributed ledger, no additional memory is needed. To further improve security, the distributed ledger may be a private blockchain, e.g., Hyperledger Fabric, Enterprise Ethereum Alliance, Quorum, MultiChain, and R3 Corda.

At block 2030, a symmetric key is generated based on the identity associated with the at least one of the one or more business objects.

For instance, if the transaction generated may be associated with more than one business objects, such as the three business objects respectively denoted by identities 4321-4323 of transaction 4320, the symmetric key for encrypting the transaction 4320 may be generated based on any one of or two of the three identities 4321-4323. Alternatively, the symmetric key for encrypting the transaction 4320 can be generated based on all the three identities 4321-4323. If the transaction generated is associated with only one business object, the symmetric key for encrypting the transaction is generated based on the identity of such a business object.

According to various examples of this disclosure, the symmetric key may be generated using an efficient secure hash algorithm (SHA), e.g., SHA256, or a keyed-hash message authentication code (HMAC), such as HMAC-SHA256. It is possible to use any other similar algorithms. Alternatively, in a simple implementation, the identity may be directly used as the symmetric key.

When generating the symmetric key, if identities of more than one business objects are involved, the identities may be concatenated one by one or may be added to obtain a sum. Then, an SHA may be applied to the concatenation of or the sum of the identities to obtain the symmetric key. Alternatively, the symmetric key may correspond to the concatenation of or the sum of the identities. It is also possible to apply any one or more of other operations, e.g., mathematical and/or logic operations, to the identities or also other attributes of more than one business objects.

Generally, the node, e.g., either the node 401 or the user node 405, can successively generate multiple transactions associated with the at least one of the one or more business objects and each of the multiple transactions is encrypted using different symmetric keys generated based on the identity associated with the at least one of the one or more business objects. For example, referring to FIGs. 1 and 2, when node 401 or user node 405 generates transaction 4320, it may generate two different symmetric keys for nodes 402 and 403 to encrypt the same transaction 4320, and thereby two different ciphertexts are obtained and transmitted to nodes 402 and 403, respectively. Thus, security can be improved. It is also possible to use the same symmetric key to encrypt the same transaction regardless of which node the transaction will be transmitted to. For example, the well-known hash chain method, which is disclosed in "L. Lamport, Password Authentication with Insecure Communication, Communications of the ACM 24.11 (November 1981), pp 770-772.", may be used to generate the symmetric key for respective transaction. Thus, Involving different business objects in a transaction would result in a different symmetric key.

At block 2040, the transaction is encrypted based on the symmetric key to obtain ciphertext, and the ciphertext comprises the encrypted transaction.

According to various examples, encrypting the transaction may comprise encrypting a part of the transaction or the whole transaction. For example, a transaction associated with the business object - Manager - can be encrypted the respective part associated with its attribute "Name", but the other attributes, e.g., "Second name", "Age", "Area", may not be encrypted. Alternatively, all of its attribute can be encrypted.

For example, the transaction can be encrypted using symmetric cryptography, e.g., symmetric-key algorithms which use the same key for both encryption and decryption. After obtaining the ciphertext, the respective ciphertext can be transmitted to other nodes of which each also maintains a copy of the distributed ledger. I.e., the method 2000 may additionally or optionally comprise transmitting the ciphertext to at least one of the other nodes of the network. If only a part of the transaction is encrypted, the other plaintext of the transaction would be transmitted together with the ciphertext of the encrypted part of the transaction.

According to various examples, there may be scenarios in which a new business object may be created. Then, the method may optionally or additionally comprises generating an identity associated with the new business object and storing the identity associated with the new business object. The identity associated with the new business object may be unique and/or non-manipulable.

If the identity associated with each of the at least one of the one or more business objects is obtained from the distributed ledger, the storing of the identity associated with the new business object may comprise adding the identity associated with the new business object to the distributed ledger. For example, if the new business object is created by a node maintaining a copy of the distributed ledger, said adding the identity associated with the new business object to the distributed ledger may comprise adding the identity to a copy of the distributed ledger maintained by the node creating the new business object, and updating copies of the distributed ledger maintained by at least one of the other nodes of the network. If the new business object is created by a user node, e.g., 405 or 406 of FIG.1, the user node may transmit the identity associated with the new business object to all the nodes 401-403 of the network 410, e.g., via broadcast. Alternatively, the user node may transmit the identity associated with the new business object to any one of the nodes 401-403 of the network 410, and the node received the identity can perform an update of copies of the distributed ledger maintained by at least one of the other nodes of the network.

If the identity associated with each of the at least one of the one or more business objects is obtained from a memory of the node which is separated from the distributed ledger, the storing of the identity associated with the new business object may comprise storing the identity associated with the new business object in the memory of the node, and respective memory of at least one of the other nodes of the network. For example, the memory may be the memory 93 of the node 91 of FIG. 3.

According to various examples, in order to securely share the identity associated with the new business object between/among nodes of the network, e.g., some or all nodes containing a copy of the distributed ledger, asymmetric cryptography may be used for sharing the identity associated with the new business object. Alternatively, it is also possible to apply symmetric encryptions with a session key obtained with some Key encapsulation mechanisms (KEMs). KEMs are also based on asymmetric cryptography. Typically, all nodes in a network, e.g., a blockchain network, support asymmetric cryptography, to enable additional functionalities, for example, digital signatures. The sharing of the identity may be performed as the first transaction associated with the respective business object(s).

After sharing the identity associated with the new business object, all nodes maintaining the distributed ledger or generating transactions associated with the new business object can obtain the identity locally/remotely, e.g., a copy of the distributed ledger maintained by the respective node or the additional memory, and thereby can further generate/derive a symmetric key for either encrypting newly generated transactions or decrypting received transactions based on a respective symmetric key. The respective generated key is only known to the organizations holding this business object, e.g., the user node 405 or 406 of FIG. 1, and to all nodes containing a ledger, e.g., the nodes 401-403 of FIG. 1, in the private blockchain network. Also, it could be known to organizations that did have the business object in the past. Accordingly, security is improved.

Optionally or additionally, the method may further comprise obtaining address information associated with the identity associated with each of the at least one of one or more business objects and transmitting the address information to at least one of the other nodes of the network. Such address information may facilitate obtaining the identity associated with each of the at least one of the one or more business objects when decrypting the ciphertext at a node to which the ciphertext is transmitted. For example, such address information may indicate which block of and/or which transaction of the distributed ledger the identity associated with each of the at least one of one or more business objects are respectively stored in. Alternatively, such address information may indicate where the identity associated with each of the at least one of one or more business objects are respectively stored in the additional memory separated from (the copy of) the distributed ledger. Optionally or additionally, such address information may be encrypted using a further symmetric key. It is also possible not to encrypt the address information, i.e., transmitting plaintext of the address information directly to corresponding nodes, particularly when the distributed ledger is maintained by nodes of a private blockchain network, because attackers cannot access to the distributed ledger and all previous transactions were transmitted securely, i.e., encrypted using the symmetric key generated according to techniques disclosed herein.

Optionally or additionally, in order to verify the consistency of the identities for generating symmetric keys for the encryption and for the decryption of transactions, the method 2000 may comprise generating, using a pre-defined hash function, a hash value based on the identity associated with the at least one of the one or more business objects, and the ciphertext further comprises the hash value. Accordingly, the node receiving the ciphertext may generate, using the pre-defined hash function, a further hash value based on the identity associated with the at least one of the one or more business objects, compare the hash value with the further hash value, and determine whether the symmetric key has been correctly generated based on said comparing. If both hash values are the same, the identities for generating symmetric keys for the encryption and for the decryption of transactions are consistent, i.e., the symmetric key has been correctly generated. Otherwise, the identities for generating symmetric keys for the encryption and for the decryption of transactions are not consistent, i.e., the symmetric key has not been correctly generated, which may indicate a possible attack or other security issues. Thus, the symmetric key can be authenticated.

According to various example, the pre-defined hash function may be an efficient SHA, e.g., SHA256, or a HMAC, such as HMAC-SHA256.

Optionally or additionally, in order to increase security, it is also possible to include a randomly generated parameter in the ciphertext that can be cached in the receiver node, typically nodes maintaining the distributed ledger. Accordingly, the method 2000 may optionally or additionally comprise randomly generating a parameter. The randomly generated parameter may be digits, characters, or a combination of both. This parameter can be used for encryption and/or decryption associated with subsequent transactions in the following scenarios:
Scenario 1:
   The generating of the symmetric key at block 2030 of the method 2000 may be further based on the randomly generated parameter. For example, the randomly generated parameter may be an additional input of an efficient SHA, e.g., SHA256, or a HMAC, such as HMAC-SHA256.
Scenario 2:
   The randomly generated parameter may be used to separately encrypt the address information associated with the identity associated with each of the at least one of one or more business objects. For example, the randomly generated parameter may be used as a symmetric key of a symmetric cryptographic algorithm for encrypting/decrypting the address information.
Scenario 3:
   The hash value for verifying the consistency of the identities for generating symmetric keys for the encryption and for the decryption of transactions can be further based on the randomly generated parameter. For example, if the symmetric key is generated, using a hash function, based on the identity associated with the at least one of the one or more business objects, the hash value can be generated, using the same hash function, based on the randomly generated parameter together with the identity associated with the at least one of the one or more business objects. If the symmetric key is generated further based on the randomly generated parameter, a further randomly generated parameter may be used to generate the hash value for the verification.

Accordingly, the hash value can be attached to the ciphertext. The receiver node can then regenerate this hash value by applying the same hash function on the previously cached parameter for this communication and the corresponding identities for the current transaction, which may be addressed and read from the available transaction blocks in the distributed ledger or the additional memory. Finally, comparing both the received and the regenerated hash values may ensure the consistency of the symmetric key.

According to various examples, the randomly generated parameter respectively used in the three scenarios mentioned above may be the same or different. The randomly generated parameter can be initially delivered or updated between/among nodes of the network using asymmetric cryptography. The sender node of transactions may use different parameters for different transactions, and the randomly generated parameters may be stored in each node maintaining the distributed ledger. The randomly generated parameter may rely on node pairs. For example, communications within each pair of node pairs (401, 402) and (401, 403) of FIG. 1 may use one identical randomly generated parameter.

The method 2000 benefits from unique and/or non-manipulable identities of business objects to increase the efficiency and performance for secured communication over an insecure channel, using a symmetric encryption method, like the Advanced Encryption Standard (AES). All transactions that relate to the same business objects may be secured based on a symmetric key derived/generated from the corresponding unique and/or non-manipulable identities of the business objects, which are stored and can be addressed in a distributed ledger or in an additional memory. The method 2000 may particularly facilitate techniques related to private blockchain networks. Nodes of the private blockchain networks can access the distributed ledger, and outside the networks, organizations or applications that have (or had) access to the business object also have access to the identity and can derive/generate the same symmetric key to communicate with the nodes of the blockchain network.

FiG. 5 is a flowchart of a method 3000 according to various examples. The flowchart of FIG. 5 could be executed by a node of a network of nodes that is maintaining a distributed ledger such as the blockchain 420. For instance, the method 3000 of FIG. 5 could be executed by any one of nodes 401-403 of the network 410 of FIG. 1. More specifically, it would be possible that the method 3000 according to FIG. 5 is executed by the processor 92 upon loading and executing program code from the memory 93, cf. FIG. 3.

Prior to executing the method 2000 of FIG. 5, the blockchain 420 can be instantiated. For this, genesis data can be replicated across all nodes of the network.

FIG. 5 illustrates a method 3000 that pertains to decrypting ciphertext, e.g., the ciphertext obtained by using the method 2000 of FIG. 4, after receiving by a node the ciphertext from a further node of a network maintaining a distributed ledger. For example, node 401 or user node 405 obtains ciphertext by encrypting transaction 4320 using the method 2000 and transmits the ciphertext to node 402. Node 402 can then utilize the method 3000 to decrypt the ciphertext. The ciphertext comprises an encrypted transaction which is associated with at least one of one or more business objects. The encrypted transaction is decrypted based on a symmetric key and the symmetric key is generated based on the identity associated with the at least one of the one or more business objects. The identity associated with the at least one of the one or more business objects is obtained based on the ciphertext. Details of the method 3000 are described below.

At block 3010, ciphertext is received from a further node of the network, and the ciphertext comprises an encrypted transaction which is associated with at least one of one or more business objects.

At block 3020, an identity associated with each of the at least one of the one or more business objects is obtained based on the ciphertext.

Similar to the method 2000 of FIG. 4, the identity associated with each of the at least one of the one or more business objects may be obtained from (the copy of) the distributed ledger. For example, the identity associated with each of the at least one of the one or more business objects may be obtained from a previous transaction associated with the at least one of the one or more business objects (of the copy) of the distributed ledger.

For example, referring to FIG. 2, after receiving the ciphertext associated with transaction 4330, the at least one of the one or more business objects may be obtained from transaction 4320 or 4310. Alternatively, the at least one of the one or more business objects may be obtained from any one of the preceding transactions of transaction 4310, such as the first transaction of block 4220. Further, the at least one of the one or more business objects may be obtained from any one of transactions of preceding blocks of block 4220, e.g., block 4210.

Alternatively, the identity associated with each of the at least one of the one or more business objects may be obtained from a memory of the node, which is separated from (the copy of) the distributed ledger.

According to various examples, the memory may be a secured and protected memory, which is additional to, e.g., memory 93 of node 91, for setting up a secure message interface for transactions in the distributed ledger, such as blockchain 420. The identity associated with each of the at least one of the one or more business objects may be pre-defined and stored in the memory. Additionally or optionally, the respective business objects corresponding to the respective identity may be stored in the memory in a manner of one-to-one mapping.

At block 3030, a symmetric key is generated based on the identity associated with the at least one of the one or more business objects.

Block 3030 may be the same as block 2030 of the method 2000 as explained above.

At block 3040, the encrypted transaction is decrypted based on the symmetric key.

The decryption of block 3040 is an inverse process of the encryption of block 2040 of the method 2000. For example, the encrypted transaction can be decrypted using symmetric cryptography, e.g., symmetric-key algorithms which use the same key for both encryption and decryption.

Optionally or additionally, the method 3000may further comprise receiving, from the further node, address information associated with the identity associated with each of the at least one of the one or more business objects and said obtaining of the identity associated with each of the at least one of the one or more business objects may be based on the address information. A detailed explanation with respect to the address information can be found in the corresponding description of the method 2000.

Additionally or optionally, as explained above in connection with the method 2000, the ciphertext may further comprise a hash value, and the method 3000 may further comprise generating, using a pre-defined hash function, a further hash value based on the identity associated with the at least one of the one or more business objects and comparing the hash value with the further hash value, and determining whether the symmetric key has been correctly generated based on said comparing, i.e., to authenticate the symmetric key.

Summarizing, the idea of this disclosure is to encrypt and/or decrypt transactions exchanged with all nodes that maintain copies of a distributed ledger in a network, such as a private blockchain network, based on a symmetric key. The symmetric key is generated/derived based on an identity associated with each of at least one of one or more business objects involved in a transaction. Each of the identities may be unique and/or non-manipulable identities. All subsequent transactions involving previously known business objects may be encrypted and/or decrypted by employing different symmetric keys generated/derived from the identities of these business objects, e.g., using an SHA.

The proposed technique aims to generate different symmetric keys from unique and non-manipulable identities of transacted business objects, which are stored in and can be queried from a distributed ledger of the nodes or in protected separate memory of nodes that maintain the distributed ledger. This concept overcomes the issues of currently existing solutions for encrypted communication between nodes of a network. Compared to solutions based on peer-to-peer channels, like Hyperledger Fabric, the proposed concept solves the problem of providing a protected channel for the exchange of symmetric keys. Compared to techniques used by MultiChain, the proposed technique reduces the complexity, since the calculation of asymmetric cryptography is required only once for newly created business objects. Then, all subsequent transactions are encrypted and/or decrypted using the stored identities in the corresponding node and a symmetric cryptographic algorithm, which is computationally efficient. The techniques prevent the use of protected memories to store the symmetric keys, and additional addressing complexity for the search process for stored symmetric keys in such memories. Also, transactions for a business object do not have to be encrypted individually with a different key for each node, but one symmetric key can be used by all participants of a transaction.

The disclosed techniques reduce search-complexity and/or memory requirements since no additional memory is required to store many symmetric keys, as described for example by the private data collection of Hyperledger Fabric. Furthermore, no additional protected communication, e.g. peer-to-peer channels, are required, to distribute the corresponding symmetric keys to the nodes of a network. In addition, such techniques also improve the reliability against attacks, since the symmetric keys are not directly stored in the distributed ledger of the nodes. Instead, different symmetric keys are generated from the identities of the business objects involved in a transaction. Instead of employing one different symmetric key for every two nodes that aim to communicate over an insecure channel, the disclosed techniques generate a different symmetric key per transaction independent of the employed nodes. Depending on the involved business objects in a transaction different keys are generated from the corresponding unique and non-manipulable identities of these objects. Hence, if an attacker successfully retrieves the used symmetric key, this would violate the security of the current transaction (not the secure communication between two blockchain nodes or all subsequent transactions of a business object).

The techniques disclosed in this disclosure may facilitate communicating transactions over an insecure channel connecting nodes of a network. In particular, such techniques may facilitate the utilization of private blockchain networks, which allow data visibility only for known participants, and the process of creating new blocks of transactions is validated by authentic nodes.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

## Claims

1. A computer-implemented method (2000) for operating a node (401-403, 405-406, 91) of a network (410), the network (410) maintaining a distributed ledger (420), the method (2000) comprises:
- generating (2010) a transaction (99, 4310, 4320, 4330) associated with at least one of one or more business objects;
- obtaining (2020) an identity (4321-4323) associated with each of the at least one of the one or more business objects;
- generating (2030) a symmetric key based on the identity (4321-4323) associated with the at least one of the one or more business objects;
- encrypting (2040) the transaction (99, 4310, 4320, 4330) based on the symmetric key to obtain ciphertext, wherein the ciphertext comprises the encrypted transaction.

2. The method of claim 1, wherein the identity (4321-4323) associated with each of the at least one of the one or more business objects is obtained from the distributed ledger (420) .

3. The method of claim 2, wherein the identity (4321-4323) associated with each of the at least one of the one or more business objects is obtained from a previous transaction (99, 4310, 4320, 4330) associated with the at least one of the one or more business objects of the distributed ledger (420).

4. The method of claims 2 or 3, further comprising:
- creating a new business object;
- generating an identity associated with the new business object;
- adding the identity associated with the new business object to the distributed ledger (420).

5. The method of claim 1, wherein the identity (4321-4323) associated with each of the at least one of the one or more business objects is obtained from a memory of the node (401-403, 405-406, 91), wherein the memory is separated from the distributed ledger (420).

6. The method of claim 5, further comprising:
- creating a new business object;
- generating an identity associated with the new business object;
- storing the identity associated with the new business object in the memory of the node (401-403, 405-406, 91), and respective memory of at least one of the other nodes (401-403, 405-406, 91) of the network (410).

7. The method of any one of the preceding claims, the method further comprising:
- successively generating multiple transactions (99, 4310, 4320, 4330) associated with the at least one of the one or more business objects, wherein each of the multiple transactions is encrypted using different symmetric keys generated based on the identity (4321-4323) associated with at least one of the one or more business objects.

8. The method of any one of the preceding claims, further comprising:
- randomly generating a parameter;
wherein said generating of the symmetric key is further based on the randomly generated parameter.

9. The method of any one of the preceding claims, further comprising:
- obtaining address information associated with the identity (4321-4323) associated with each of the at least one of one or more business objects; and
- transmitting the address information to at least one of the other nodes (401-403, 405-406, 91) of the network (410) .

10. The method of any one of the preceding claims, further comprising:
- generating, using a pre-defined hash function, a hash value based on the identity (4321-4323) associated with the at least one of the one or more business objects; wherein the ciphertext further comprises the hash value.

11. The method of any one of the preceding claims, further comprising:
- transmitting the ciphertext to at least one of the other nodes (401-403, 405-406, 91) of the network (410).

12. A computer-implemented method (3000) for operating a node (401-403, 91) of a network (410), the network (410) maintaining a distributed ledger (420), the method (3000) comprises:
- receiving (3010) ciphertext from a further node of the network, wherein the ciphertext comprises an encrypted transaction which is associated with at least one of one or more business objects;
- obtaining (3020) an identity (4321-4323) associated with each of the at least one of the one or more business objects based on the ciphertext;
- generating (3030) a symmetric key based on the identity (4321-4323) associated with the at least one of the one or more business objects;
- decrypting (3040) the encrypted transaction based on the symmetric key.

13. The method of claim 12, wherein the identity (4321-4323) associated with each of the at least one of the one or more business objects is obtained from the distributed ledger (420) .

14. The method of claim 13, wherein the identity (4321-4323) associated with each of the at least one of the one or more business objects is obtained from a previous transaction (99, 4310, 4320, 4330) associated with the at least one of the one or more business objects of the distributed ledger (420).

15. The method of claim 12, wherein the identity (4321-4323) associated with each of the at least one of the one or more business objects is obtained from a memory of the node (401-403, 91), wherein the memory is separated from the distributed ledger (420).

16. The method of any one of claims 12-15, further comprising:
- receiving, from the further node (401-403, 91), address information associated with the identity (4321-4323) associated with each of the at least one of the one or more business objects,
wherein said obtaining of the identity (4321-4323) associated with each of the at least one of the one or more business objects is based on the address information.

17. The method of any one of claims 12-16, wherein the ciphertext further comprises a hash value, and the method further comprises:
- generating, using a pre-defined hash function, a further hash value based on the identity (4321-4323) associated with the at least one of the one or more business objects;
- comparing the hash value with the further hash value;
- determining whether the symmetric key has been correctly generated based on said comparing.

18. A node (401-403, 405-406, 91), the node (401-403, 405-406, 91) comprising a processor (92) and a memory (93), wherein upon loading and executing program code from the memory (93), the processor (92) is configured to perform the method (2000, 3000) according to any one of the preceding claims.
